# FASCICULE DE BREVET EUROPEEN

(11) **EP 2 925 480 B1**
(45) Date de publication et mention de la délivrance du brevet: **03.05.2017**
(21) Numéro de dépôt: 13803186.9
(22) Date de dépôt: 26.11.2013
(51) Int. Cl.: B23K 20/12, B23P 6/00, B23P 15/00, F01D 5/30

(54) **PROCEDE DE SOUDAGE PAR FRICTION D'UNE PALE SUR UN DISQUE DE ROTOR D'UNE TURBOMACHINE**
VERFAHREN ZUM REIBSCHWEISSEN EINER SCHAUFEL AUF EIN TURBINENMOTORLAUFRAD
METHOD OF FRICTION WELDING A BLADE ONTO A TURBINE ENGINE ROTOR DISC

(30) Priorité: 28.11.2012 FR 1261367
(43) Date de publication de la demande: 07.10.2015
(73) Titulaire: SNECMA, 75015 Paris (FR)
(72) Inventeur: MOTTIN, Jean-Baptiste, F-77550 Moissy Cramayel Cedex (FR); VASSAULT, Marc, Jacky, F-77550 Moissy Cramayel Cedex (FR)
(74) Mandataire: Pichat, Thierry
(86) Numéro de dépôt international: PCT/FR2013/052863
(87) Numéro de publication internationale: WO 2014/083275

(56) Documents cités:
- EP-A1- 0 850 718
- JP-A- 2009 039 746
- US-A- 4 934 583

## Description

La présente invention concerne un procédé de soudage par friction d'une pale sur un disque de rotor d'une turbomachine telle qu'un turboréacteur ou un turbopropulseur d'avion, selon le préambule de la revendication 1 (voir, par exemple EP-A1-0 850 718).

Un disque aubagé monobloc (DAM) de turbomachine est un disque de rotor qui comporte à sa périphérie externe une rangée annulaire d'aubes sensiblement radiales, qui sont d'une seule pièce avec le disque. Ce type de disque peut être obtenu par soudage par friction de pales sur un disque portant à sa périphérie des plots en saillie, l'extrémité radialement interne de chaque pale étant soudée à un plot du disque.

Ce procédé peut être utilisé pour réparer un disque aubagé monobloc. Dans le cas où au moins une aube du disque est détériorée et doit être remplacée, elle est retirée, par exemple par usinage, de sorte qu'un plot de matière (correspondant à la partie d'extrémité radialement interne de l'aube usinée) reste à la périphérie du disque pour le soudage d'une pale neuve.

Les demandes antérieures EP-A1-0 669 183 et EP-A1-1 516 690 de la demanderesse illustrent l'état de la technique à ce sujet.

Dans le cas précité de la réparation d'un disque aubagé monobloc, le plot restant à la périphérie du disque a une dimension transversale qui varie de manière importante entre son maître couple et son bord d'attaque (et entre son maître couple et son bord de fuite). Dans un cas particulier, le rapport entre la dimension transversale du maître couple et celle du bord d'attaque d'un plot est de 19. On a constaté que cette variation importante de la dimension transversale du plot entraîne, après soudage par friction, des hétérogénéités dans la microstructure de la zone de liaison de la pale au disque. Par ailleurs, du fait de la géométrie des pièces, des aspects thermiques sont également à prendre en compte car la pression importante de soudage par unité de surface est plus importante au niveau du bord d'attaque et du bord de fuite du plot et entraîne des zones affectées thermo-mécaniquement (ZATM) plus étendues.

Pour remédier à ces inconvénients, on a déjà proposé, notamment dans la demande EP-A1-0 850 718, de monter des taquets sur les bords d'attaque et de fuite du plot précité du disque, chaque taquet comportant un évidement dans lequel est engagé le bord d'attaque ou de fuite du plot et dont la forme est sensiblement complémentaire de celle de ce bord.

Chaque taquet épouse la forme du bord d'attaque ou de fuite sur lequel il est monté et augmente localement la dimension transversale et la tenue du plot, de façon à réduire voire supprimer les inconvénients précités. Les taquets permettent en effet d'homogénéiser la dimension transversale de matière soudée.

Dans la technique actuelle illustrée par le document EP-A1-0 850 718, les taquets sont maintenus en place à la périphérie du disque par des organes qui sont fixés par des moyens du type vis-écrou sur des moyens d'immobilisation du disque.

Cette technologie n'est toutefois pas fiable car des jeux peuvent exister au montage entre les taquets et les bords d'attaque et de fuite du plot. De plus, lors du soudage par friction, les taquets peuvent être soumis à des vibrations et des contraintes importantes qui peuvent entraîner des déplacements de ceux-ci vis-à-vis du disque.

L'invention a notamment pour but d'apporter une solution simple, efficace et économique à ces problèmes.

A cet effet, elle propose un procédé de soudage par friction d'une pale sur un disque de rotor d'une turbomachine, ce disque comportant à sa périphérie externe un plot en saillie sur laquelle la pale est destinée à être soudée, le procédé comprenant une étape consistant à monter des taquets sur des bords d'attaque et de fuite du plot, chaque taquet comportant un évidement dans lequel est engagé le bord d'attaque ou de fuite du plot et dont la forme est sensiblement complémentaire de celle de ce bord, caractérisé en ce que :
- avant le soudage par friction, les taquets sont solidarisés au plot par soudage,
- pendant l'opération de soudage par friction, les cordons de soudure (28) entre les taquets et le plot sont au moins en partie expulsés dans des bourrelets de matière qui se forment autour de la zone de liaison de la pale au plot et qui sont par la suite destinés à être retirés ou supprimés, par exemple par usinage, et,
- les cordons de soudure des taquets ont une profondeur (e) ou dimension radiale, par rapport à l'axe longitudinal du disque, qui est inférieure ou égale à la moitié de l'épaisseur totale (E) de matière consommée lors du soudage par friction, ladite épaisseur totale (E) étant l'épaisseur cumulée de matière consommée de la pale et du plot.

La profondeur de pénétration de la soudure peut être égale ou inférieure à la consommation matière côté plot.

Ceci permet de s'assurer qu'au moins une partie, et avantageusement la totalité, de la zone fondue par le soudage des taquets se retrouve dans les bourrelets après le soudage par friction..

Le soudage des taquets au plot, appelé « épinglage » (soudage à faible pénétration), avant le soudage par friction de la pale sur le plot, est particulièrement avantageux car il permet d'immobiliser les taquets vis-à-vis du plot et de supprimer tout jeu entre les taquets et le plot. Le soudage des taquets est par exemple réalisé par soudage laser, à l'arc (TIG, plasma), par fusion, etc. Les cordons de soudure entre les taquets et le plot sont avantageusement expulsés dans les bourrelets de matière (aussi appelés « flashs ») qui se créent lors du soudage par friction. La zone fondue (ZF) lors du soudage des taquets de retrouve donc (après le changement de pale) en dehors de la zone de liaison de la pale au plot. Comme les bourrelets de matière sont par la suite éliminés, cette zone fondue est supprimée et ne se retrouve donc pas dans le disque de rotor fini. De manière encore plus avantageuse, la zone affectée thermiquement (ZAT) par l'opération de soudage des taquets peut au moins en partie être expulsée dans les bourrelets. Cette zone se distingue du reste de la pièce en particulier par une microstructure différente (grains de taille différente) et/ou une dureté plus faible. Cette zone s'étend dans le plot du disque au voisinage des cordons de soudure des taquets. Dans le cas où la zone fondue et la zone affectée thermiquement seraient expulsées dans les bourrelets précités, celles-ci n'affecteraient pas la santé matière du disque de rotor fini.

La pale peut être soudée au plot par soudage par friction linéaire ou orbitale.

Avant le soudage par friction, un cordon de soudure peut être formé entre chaque taquet et le bord d'attaque ou de fuite du plot. Ce cordon de soudure s'étend de préférence en continu le long du bord périphérique radialement externe de l'évidement de ce taquet.

Les taquets peuvent être réalisés dans un matériau identique à ou de même base chimique (composant principal) que celui du plot et/ou de la pale. Le disque de rotor est par exemple réalisé en alliage à base de titane, tel que du Ti17.

Avant le soudage par friction, un élément consommable, destiné à être au moins en partie détruit lors du soudage par friction, peut être rapporté et fixé sur le plot. Cette étape est particulièrement avantageuse dans le cas de la réparation d'un disque de rotor. En effet, après usinage et retrait d'une aube abîmée, le plot restant sur le disque est déjà aux côtes finies, c'est-à-dire que ses dimensions, et en particulier sa dimension transversale, sont celles qu'aura la partie d'extrémité radialement interne de l'aube après soudage par friction d'une pale sur le plot et usinage de finition. L'élément consommable rapporté sur le plot avant le soudage par friction permet de limiter la consommation de matière du plot lors du soudage par friction.

Pour limiter la consommation de matière de la pale rapportée sur le plot, il est possible de surdimensionner sa partie d'extrémité radialement interne (soit de manière localisée au niveau de ses bords d'attaque et de fuite, soit de manière généralisée), cette partie d'extrémité étant destinée à être usinée après soudage pour la mise aux côtes de l'aube.

Dans le cas de la fabrication d'un disque de rotor, le plot en saillie prévu à la périphérie du disque peut également être surdimensionné lors de la conception du disque pour éviter d'avoir à y rapporter un élément consommable du type précité.

Avant le soudage par friction, des organes de protection du disque, tels que des tôles, peuvent être intercalés entre la périphérie externe du disque et les taquets. Ceci limite les risques de détérioration du disque lors du soudage par friction, qui peut engendrer des efforts de matage transmis au disque par les taquets.

La présente invention concerne également une utilisation du procédé décrit ci-dessus pour la fabrication d'un disque aubagé monobloc ou pour la réparation d'un tel disque.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue schématique partielle en perspective d'un disque aubagé monobloc de turbomachine ;
- la figure 2 est une vue schématique partielle en perspective du disque de la figure 1 après usinage de ses aubes en vue de leur remplacement ;
- la figure 3 est une vue schématique en perspective d'un taquet utilisé dans le procédé selon l'invention,
- la figure 4 est une vue très schématique d'un plot de disque de rotor et de taquets engagés sur les bords d'attaque et de fuite de ce plot ;
- les figures 5 à 8 sont des vues très schématiques partielles en coupe transversale à l'axe longitudinal du disque d'un plot de disque, de taquets montés sur ce plot, et d'une pale rapportée sur ce plot, et illustrent des étapes du procédé selon l'invention ; et
- la figure 9 est une vue similaire à celle de la figure 5 et illustre une variante de réalisation du procédé selon l'invention, dans laquelle des organes de protection sont intercalés entre les taquets et la périphérie du disque de rotor.

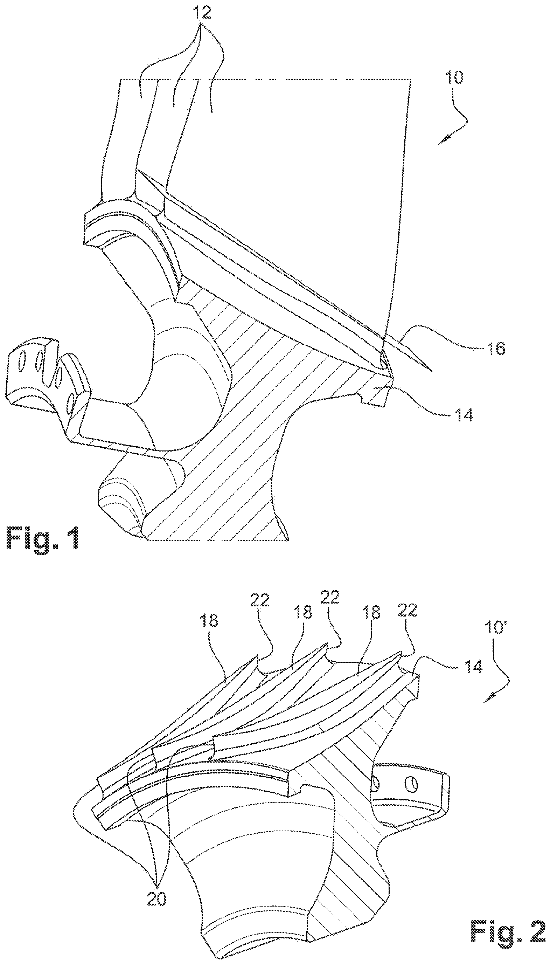

On se réfère d'abord à la figure 1 qui représente une partie d'un disque aubagé monobloc 10 (DAM) d'une turbomachine, ce disque 10 portant une rangée annulaire d'aubes 12 sensiblement radiales à l'axe longitudinal du disque et qui sont d'une seule pièce avec le disque. Les aubes 12 sont reliées par leurs extrémités radialement internes à une plate-forme annulaire 14 qui s'étend à la périphérie externe du disque.

En cas de détérioration des aubes 14, il est possible de les retirer par usinage en vue de leur remplacement. La référence 16 en figure 1 désigne un plan de coupe d'une aube 12 destinée à être remplacée, ce plan de coupe s'étendant sensiblement parallèlement et à distance de la surface annulaire externe de la plate-forme 14.

La distance entre la plate-forme 14 et le plan de joint 16 est déterminée pour qu'un plot de matière (correspondant à la partie radialement interne de l'aube s'étendant entre la plate-forme 14 et le plan de coupe 16) reste sur la plate-forme 14 pour servir de support à la fixation par soudage par friction d'une nouvelle pale d'aube.

La figure 2 représente un disque de rotor 10' portant à sa périphérie une rangée annulaire de plots 18 du type précité. Ce disque 10' peut être obtenu par usinage et retrait des aubes d'un disque aubagé monobloc 10 en vue de la réparation de ce disque, comme expliqué dans ce qui précède. Alternativement, il peut être obtenu directement, par exemple de fonderie, en vue de la fabrication d'un disque aubagé monobloc. Dans ce dernier cas, les plots sont réalisés lors de la fabrication du disque et sont chacun destinés à recevoir une pale d'aube.

Comme cela est visible en figure 2, chaque plot comprend un bord d'attaque 20 et un bord de fuite 22, qui sont reliés entre eux par un intrados et un extrados.

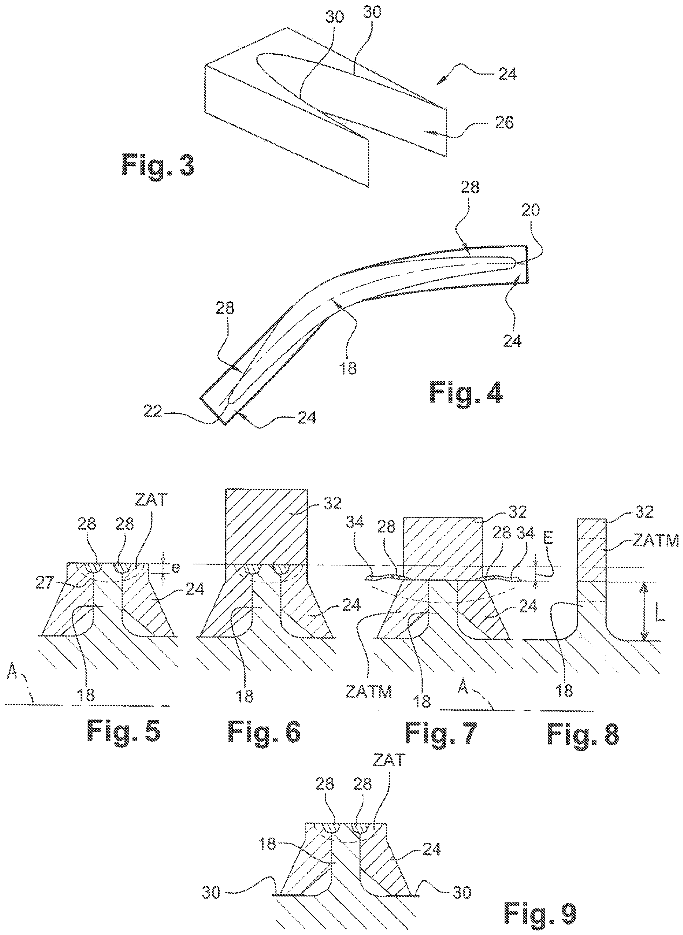

Une pale (non représentée) est fixée sur chaque plot 18 du disque par soudage par friction linéaire ou orbitale. Pour éviter les problèmes décrits ci-dessus liés à la variation importante de la dimension transversale du plot 18 entre son maître couple et ses bords d'attaque 20 et de fuite 22, il est connu de monter des taquets 24 sur les bords d'attaque et de fuite de chaque plot 18 (figures 3 et 4).

Les taquets 24 permettent d'homogénéiser la dimension transversale de matière soudée. Ils sont en effet configurés pour limiter les variations de dimension transversale de matière (vue par la pale), le rapport entre la dimension transversale du maître couple du plot et la dimension transversale des taquets, au niveau du bord d'attaque et de fuite du plot, étant inférieur ou égal à deux avec un maximum admissible de trois, par exemple.

Un taquet 24 est en général formé d'un bloc de matière qui comprend un évidement 26 dans lequel est destiné à être engagé le bord d'attaque ou de fuite du plot. Cet évidement 26 est conformé pour épouser la forme de ce bord, comme cela est visible en figure 4. Dans l'exemple représenté, le taquet 24 présente une forme sensiblement en U et comprend deux pattes latérales de part et d'autre de l'évidement 26. En position de montage, chaque taquet est engagé sur le bord d'attaque ou de fuite d'un plot et repose sur la surface radialement externe de la plate-forme 14 du disque.

Le procédé selon l'invention permet de remédier aux inconvénients de la technique antérieure liés à l'utilisation de ces taquets 24, grâce au soudage ou « épinglage » des taquets sur les plots 18, avant le soudage par friction de la pale sur le plot.

Dans un mode de réalisation de l'invention représenté en figure 4, un cordon de soudure 28 est formé en continu entre le bord périphérique radialement externe 30 de l'évidement 26 de chaque taquet 24 et le bord d'attaque ou de fuite du plot 18. Ce cordon de soudure 28 peut être réalisé par soudage laser, à l'arc (TIG, plasma, etc.), ou tout autre type de soudage, et a de préférence une faible profondeur ou dimension radiale rapportée à la dimension transversale, ou radiale, L du plot 18. De préférence, avant le soudage des taquets 24, ceux-ci sont séparés des bords d'attaque 20 et de fuite 22 du plot 18 par des jeux d'au plus 1 mm.

Les figures 5 à 8 représentent des étapes du procédé selon l'invention.

Dans la figure 5, le taquet 24 est engagé sur l'un des bords 20, 22 précités du plot 18, ses pattes latérales s'étendant de part et d'autre du plot. Le cordon de soudure 28 s'étend entre le plot 18 et le taquet 24, le long du bord périphérique externe de l'évidement du taquet, comme expliqué dans ce qui précède. Le cordon de soudure 28 a une profondeur ou dimension radiale, par rapport à l'axe longitudinal (A figure 5) du disque, notée e. Le cordon de soudure 28 représente la zone fondue (ZF) lors de l'opération de soudage du taquet et les traits pointillés 27 délimitent une zone affectée thermiquement (ZAT) par cette opération de soudage. Dans un cas particulier où le plot 18 est réalisé en Ti17, la dureté de l'alliage du plot dans la ZAT est de l'ordre de 300 à 350 HV et est de l'ordre de 370 à 400 HV en dehors de cette zone.

La variante de réalisation de la figure 9 diffère du mode de réalisation de la figure 5 en ce qu'au moins une tôle de protection 30, du type tôle « martyre », est intercalée entre la surface radialement externe de la plate-forme 14 du disque et le taquet 24. Cette tôle 30 évite d'endommager le disque lors de l'opération de soudage du taquet 24 et lors de l'opération de soudage par friction de la pale sur le plot 18.

Dans la figure 6, une pale 32 neuve est disposée sur le plot 18 du disque, l'extrémité radialement interne de cette pale destinée à être reliée au plot 24 pouvant être surdimensionnée, en particulier en direction transversale, ou pas si le plot possède une surépaisseur qui peut être usinée après réparation.

Le soudage par friction linéaire ou orbitale est ensuite mis en oeuvre d'une façon connue par l'homme du métier.

A l'issue de l'étape de soudage par friction et comme représenté en figure 7, la pale 32 est reliée par son extrémité radialement interne au plot 18, une partie de la matière du plot et de la pale ayant été consommée lors de ce soudage, ce qui réduit leurs dimensions radiales (dimensions suivant des radiales à l'axe A).

On note E la moitié de l'épaisseur (totale) de matière consommée lors du soudage par friction, cette épaisseur étant égale à l'épaisseur de matière consommée du plot 18 et l'épaisseur de matière consommée de l'extrémité radialement interne de la pale 32. Dans le cas où la pale et le disque sont réalisés dans un même matériau (soudage homogène), la quantité de matière consommée du plot devrait être proche de celle de la pale. Au contraire, lorsque ces éléments sont dans des matériaux différents ou des alliages présentant des différences de composition (soudage hétérogène), la matière de l'un de ces éléments peut davantage se consommer que celle de l'autre élément.

Pour des alliages à base de titane, la consommation matière cumulée est comprise entre 4 et 10mm environ en soudage homogène. Dans le cas d'assemblage de pièces en Ti17, la consommation matière du plot peut être supérieure ou égale à 2mm.

Conformément à l'invention, la profondeur e du cordon de soudure 28 est inférieure ou égale à la moitié de l'épaisseur E de matière consommée lors du soudage par friction. Dans le cas où la profondeur e est inférieure à la moitié de l'épaisseur E, la totalité du cordon de soudure 28 (c'est-à-dire la zone fondue) est expulsée dans des flashs ou bourrelets de matière 34 qui se forment autour du taquet 24 pendant le soudage par friction. La profondeur e peut par exemple être inférieure ou égale à 2,5mm.

Avantageusement, la zone affectée thermiquement ZAT précitée est également expulsée dans ces bourrelets 34 lors du soudage par friction. Dans le cas où une partie de la ZAT reste dans la zone utile du plot, elle se retrouve malaxée du fait des efforts de friction et de forgeage pendant le soudage par friction. Les grains peuvent ainsi être affinés et retrouver une taille inférieure ou égale à celle des grains du matériau de base.

Le soudage par friction génère une zone affectée thermo-mécaniquement ZATM délimitée par les traits pointillés en figure 7. Dans le cas particulier précité où le plot 18 est réalisé en Ti17, la dureté de l'alliage dans la ZATM est de l'ordre de 300 à 350 HV et cette zone présente une réduction de la taille des grains par rapport au reste du plot.

A l'issue du soudage par friction, la pale 32 est reliée par son extrémité radialement interne au plot 18 et aux taquets 24 situés au niveau des bords d'attaque et de fuite du plot.

L'étape suivante consiste à usiner le disque pour retirer les taquets 24, les bourrelets 34 et les surépaisseurs de matière prévues au départ sur la partie radialement interne de la pale 32. La figure 8 représente une aube aux côtes finies d'un disque aubagé monobloc après cette étape d'usinage. Les traits en pointillés délimitent la zone précitée affectée thermo-mécaniquement ZATM par l'opération de soudage par friction. Le disque peut subir d'autres traitements supplémentaires, tels qu'un grenaillage, un traitement thermique, etc.

## Revendications

1. Procédé de soudage par friction d'une pale (32) sur un disque de rotor (10') d'une turbomachine, ce disque comportant à sa périphérie externe un plot (18) en saillie sur laquelle la pale est destinée à être soudée, le procédé comprenant une étape consistant à monter des taquets (24) sur des bords d'attaque (20) et de fuite (22) du plot, chaque taquet comportant un évidement (26) dans lequel est engagé le bord d'attaque ou de fuite du plot et dont la forme est sensiblement complémentaire de celle de ce bord, **caractérisé en ce que** :
- avant le soudage par friction, les taquets sont solidarisés au plot par soudage,
- pendant l'opération de soudage par friction, les cordons de soudure (28) entre les taquets et le plot sont au moins en partie expulsés dans des bourrelets de matière (34) qui se forment autour de la zone de liaison de la pale au plot et qui sont par la suite destinés à être retirés ou supprimés, par exemple par usinage, et,
- les cordons de soudure (28) des taquets (24) ont une profondeur (e) ou dimension radiale, par rapport à l'axe longitudinal du disque, qui est inférieure ou égale à la moitié de l'épaisseur totale (E) de matière consommée lors du soudage par friction, ladite épaisseur totale (E) étant l'épaisseur cumulée de matière consommée de la pale (32) et du plot (18).

2. Procédé selon la revendication 1, **caractérisé en ce que**, avant le soudage par friction, un cordon de soudure (34) est formé entre chaque taquet (24) et le bord d'attaque (20) ou de fuite (22) du plot (18).

3. Procédé selon la revendication 2, **caractérisé en ce qu'**on forme le cordon de soudure (28) entre chaque taquet (24) et le bord d'attaque (20) ou de fuite (22) du plot (18) pour qu'il s'étende en continu le long du bord périphérique radialement externe (30) de l'évidement (26) du taquet.

4. Procédé selon l'une des revendications précédentes, **caractérisé en ce que** les taquets (24) sont réalisés dans un matériau identique ayant un composant chimique principal identique à celui du plot (18) et de la pale (32).

5. Procédé selon l'une des revendications précédentes, **caractérisé en ce que**, avant le soudage par friction, des organes (30) de protection du disque, sont intercalés entre la périphérie externe du disque (10') et les taquets (24).

6. Utilisation du procédé selon l'une des revendications précédentes pour la fabrication d'un disque aubagé monobloc (10) ou pour la réparation d'un tel disque.

## Patentansprüche

1. Verfahren zum Reibschweißen eines Schaufelblatts (32) an eine Rotorscheibe (10') einer Turbomaschine, wobei diese Scheibe an ihrem Außenumfang ein vorspringendes Kontaktstück (18) aufweist, an welches das Schaufelblatt angeschweißt werden soll, wobei das Verfahren einen Schritt umfasst, der darin besteht, Ansatzstücke (24) an Anström- (20) und Abströmkante (22) des Kontaktstücks anzubringen, wobei jedes Ansatzstück eine Ausnehmung (26) aufweist, in welche die Anström- bzw. Abströmkante des Kontaktstücks eingreift und deren Form im Wesentlichen komplementär zu der dieser Kante ist, **dadurch gekennzeichnet, dass**:
- vor dem Reibschweißen die Ansatzstücke durch Verschweißen fest mit dem Kontaktstück verbunden werden,
- während des Reibschweißvorgangs die Schweißnähte (28) zwischen den Ansatzstücken und dem Kontaktstück zumindest teilweise in Materialwulste (34) ausgetrieben werden, die sich um den Verbindungsbereich des Schaufelblatts mit dem Kontaktstück bilden und in der Folge dazu bestimmt sind, entfernt bzw. beseitigt zu werden, beispielsweise durch spanende Bearbeitung, und
- die Schweißnähte (28) der Ansatzstücke (24) eine Tiefe (e) bzw. radiale Abmessung bezüglich der Längsachse der Scheibe haben, die geringer oder gleich der halben Gesamtdicke (E) des beim Reibschweißen verbrauchten Materials ist, wobei die Gesamtdicke (E) die aufsummierte Dicke verbrauchten Materials von dem Schaufelblatt (32) und dem Kontaktstück (18) ist.

2. Verfahren nach Anspruch 1, **dadurch gekennzeichnet, dass** vor dem Reibschweißen eine Schweißnaht (34) zwischen jedem Ansatzstück (24) und der Anström- (20) bzw. Abströmkante (22) des Kontaktstücks (18) ausgebildet wird.

3. Verfahren nach Anspruch 2, **dadurch gekennzeichnet, dass** die Schweißnaht (28) zwischen jedem Ansatzstück (24) und der Anström-(20) bzw. Abströmkante (22) des Kontaktstücks (18) ausgebildet wird, damit diese sich durchgehend entlang des radial äußeren Umfangsrandes (30) der Ausnehmung (26) des Ansatzstücks verläuft.

4. Verfahren nach einem der vorangehenden Ansprüche, **dadurch gekennzeichnet, dass** die Ansatzstücke (24) aus einem identischen Material mit einer chemischen Hauptkomponente ausgebildet sind, die identisch zu der des Kontaktstücks (18) und des Schaufelblatts (32) ist.

5. Verfahren nach einem der vorangehenden Ansprüche, **dadurch gekennzeichnet, dass** vor dem Reibschweißen Schutzeinrichtungen (30) zum Schützen der Scheibe zwischen dem Außenumfang der Scheibe (10') und den Ansatzstücken (24) eingesetzt werden.

6. Verwendung des Verfahrens nach einem der vorangehenden Ansprüche zum Herstellen einer einstückigen, beschaufelten Scheibe (10) oder zum Reparieren einer solchen Scheibe.

## Claims

1. A method of friction welding an airfoil (32) onto a rotor disk (10') of a turbine engine, the disk having at its outer periphery a projecting stub (18) onto which the airfoil is to be welded, the method comprising a step consisting in mounting chocks (24) on leading edge (20) and trailing edge (22) of the stub, each chock including a recess (26) in which the leading edge or trailing edge of the stub is received and of a shape that is substantially complementary to the shape of that edge, the method being **characterized in that**:
• before friction welding, the chocks are secured to the stub by welding;
• during the friction welding operation, the beads of welding (28) between the chocks and the stub are expelled, at least in part, in seams of material (34) that form around the connection zone between the airfoil and the stub and that are subsequently to be removed or eliminated, e.g. by machining; and
• the weld beads (28) of the chocks (24) have a depth (e) or a radial dimension relative to the longitudinal axis of the disk that is less than or equal to half the total thickness (E) of material that is consumed during the friction welding, said total thickness (E) being the combined thickness of material that is consumed from the airfoil (32) and from the stub (18).

2. A method according to claim 1, **characterized in that**, before friction welding, a weld bead (34) is formed between each chock (24) and the leading edge (20) or trailing edge (22) of the stub (18).

3. A method according to claim 2, **characterized in that** the weld bead (28) between each chock (24) and the leading edge (20) or trailing edge (22) of the stub (18) is formed as to extend itself continuously along the radially outer peripheral edge (30) of the recess (26) in the chock.

4. A method according to any preceding claim, **characterized in that** the chocks (24) are made of identical material having a main chemical component that is identical to the main chemical component of the stub (18) and of the airfoil (32).

5. A method according to any preceding claim, **characterized in that**, before friction welding, members (30) for protecting the disk are interposed between the outer periphery of the disk (10') and the chocks (24).

6. The use of the method according to any preceding claim for fabricating a blisk (10) or for repairing a blisk.
